# EUROPEAN PATENT APPLICATION

(11) **EP 4 023 525 A1**
(43) Date of publication of application: **06.07.2022**
(21) Application number: 20217925.5
(22) Date of filing: 30.12.2020
(51) Int. Cl.: B60W 40/04, B60W 30/09, B60K 35/00, B60W 30/095, B60W 30/18, B60W 40/02, B60W 50/14, B62D 15/02, G01S 13/931, G06K 9/00, B60W 60/00

(54) **METHOD FOR DETECTING AN OBJECT UNDERNEATH A VEHICLE AFTER A PARKING PHASE, CONTROL DEVICE, VEHICLE AND COMPUTER READABLE MEMORY**

(30) Priority: 29.12.2020 EP 20217660
(71) Applicant: Argo AI GmbH, 80805 München (DE)
(72) Inventor: BERGT, Sebastian, 80805 Munich (DE)
(74) Representative: Hofstetter, Schurack & Partner

(57) **Abstract**

The invention relates to a method for detecting an object (20) underneath a vehicle (10) when resuming a drive maneuver after the vehicle (10) has been standing stationary and/or in a parking phase. The vehicle (10) provides a control device (40) that performs a monitoring function (50) to determine whether the object (20) is lying underneath the vehicle (10), wherein in the case that the object (20) is detected, the monitoring function (50) provides a control signal for triggering a protection mechanism (80) for the drive maneuver in order to assist an autonomous driving function of the vehicle (10) and/or a vehicle driver to avoid a damage caused to and/or by the object (20).

The invention further relates to a corresponding control device, vehicle and computer readable memory.

## Description

The invention is concerned with a method for detecting an object underneath a vehicle after the vehicle has been stationary and in particular after the vehicle has been in a parking phase. Furthermore, the invention concerns a control device for a vehicle. The control device can perform the inventive method.

When a vehicle has been standing still, because the vehicle has been parked or when the vehicle has momentarily been stopped due to a red traffic light signal, an object (e.g. litter and/or an animal) meanwhile might be placed underneath the vehicle. When the vehicle starts rolling or moving again, it may roll or drive over the object and, thus, may destroy the object and/or a wheel of the vehicle might be damaged due to the object (e.g. glass bottle that might have rolled underneath the vehicle).

Document DE 10 2009 001 183 A1 describes a method of detecting obstacles underneath a motor vehicle where at least one capacitive distance determining unit arranged at the lower floor of the motor vehicle is used to monitor the area below the motor vehicle, wherein an obstacle below the motor vehicle can be detected based on a value of a capacitance, which is determined by the capacitive distance determining unit. The method provides support to a driver when the vehicle drives backwards and rolls over an object.

Document US 2018 / 0 299 900 A1 describes controlling a vehicle which can manoeuvre out of a parking space in an autonomous and unmanned operation. While parking, the vehicle can capture first one or more images of its surroundings and store the images in a memory included in the vehicle. Upon starting up, the vehicle can capture second one or more images of its surrounding and compare them to the first one or more images to determine whether there is an object, person, or an animal next to the vehicle.

It is an object of the present invention to provide an optimized safety solution for detecting an object underneath a vehicle in order to assist the vehicle to avoid a damage that may be caused to and/or by the object.

The object is accomplished by the subject matter of the independent claims. Advantageous further embodiments of the invention are specified in the following description, the dependent claims and the figures.

The invention provides a method for detecting an object underneath a vehicle for or while resuming a drive maneuver after the vehicle has been parked or has been standing still. The vehicle may be parked in a parking area and/or may be momentarily stopped at a place (e.g. at a traffic signal) such that in the meantime an object may e.g. roll or crawl down under the vehicle. The object is detected before the vehicle starts rolling or moving again (wheels of the vehicle start moving or turning) and/or when the vehicle is switched on and/or when an initial drive maneuver is to be performed. The object is detected based on sensor data that can be acquired from a sensor and/or a combination of sensors which may comprise a camera and/or a radar and/or an ultrasonic sensor and/or an inductive sensor and/or a capacitive sensor and/or a passive infrared sensor and/or an active infrared sensor with an infrared light source and/or a motion sensor and/or a force sensor. A respective sensor may be mounted on the top of the vehicle and/or beneath or the bottom side of the vehicle body and/or a side of the vehicle and/or in the front and/or rear part of the vehicle. The object may be an obstacle that may for example describe an animal and/or a litter and/or a glass bottle and/or an object that may cause damage to the vehicle, in particular to the wheels of the vehicle, and/or that the obstacle may be damaged when being driven over by the vehicle.

The invention provides a control device that performs a monitoring function to determine whether the object is lying underneath the vehicle. In other words, the control device invokes the monitoring function to analyze sensor data acquired from the one sensor or the different sensors of the vehicle for detecting an object underbody area of the vehicle. The monitoring function may for example be a software module and/or a simulation and/or an algorithm employed by deep learning-based neural networks. The monitoring function may be executed in the control device and/or it may be integrated with the control device.

In the case the object is detected, the monitoring function provides a control signal to signal that a protection mechanism for the drive maneuver is triggered. The protection mechanism provides assistance for an autonomous driving function of the vehicle and/or for a vehicle driver to avoid a damage that may be caused to and/or by the object. Based on the outcome of the monitoring function, the vehicle is controlled accordingly to ensure that a predefined safety condition (e.g.an unwanted rolling or driving over an object is avoided) is fulfilled before the vehicle starts rolling or moving again and/or when the parking phase is about to complete. The protection mechanism may cause a warning signal from the control device for the vehicle driver and/or an autonomous driving function of an autonomous vehicle to stop and/or change the drive maneuver if the object is detected explicitly. Alternatively or additionally, if the monitoring function detects the object based on physical aspects of the object, the drive maneuver of the vehicle is kept on hold as long as the object is being detected and/or the object is not removed. The warning signal may be for example an audio signal or a video signal that may be played on a display unit of the vehicle. The warning signal may be a graphical image depicting the object that may be displayed on the display unit of the vehicle.

The protection mechanism may provide the control signal as an instruction signal from the control device for a change in the drive maneuver of the vehicle in order to detect the object. If the object is detected implicitly and/or the monitoring function cannot identify the object based on the sensor data, but the object is rather assumed during the drive maneuver (e.g. due to a blocking force), the autonomous driving function or the vehicle driver may be signaled to perform the drive maneuver carefully or differently and/or to check if an object is lying underneath the vehicle. The drive maneuver may for example describe a controlled movement of steered wheels of the vehicle and/or with a speed below a given speed threshold such that the object can be detected explicitly as it comes into the detection range of a sensor and/or such that the object is prevented from being driven over.

The advantage provided by the invention here is to ensure a risk-free drive maneuver of a vehicle by means of a monitoring mechanism in order to avoid any accidental damage even in the event the vehicle is left unattended. The protection mechanism may be a functional part of the control device that decides how the autonomous vehicle is to be controlled in order to avoid an unwanted rolling or driving of the vehicle over the object. The method may be used to assist a driver and/or an autonomous driving function of the vehicle.

The invention also comprises embodiments that provide features which afford additional technical advantages.

In one embodiment, the monitoring function determines the object by detecting at least a physical aspect of the object. The respective physical aspect of the object describes a size and/or a material and/or a color of the object. The object can be recognized by analyzing physical features of the object based on data acquired from one or different sensors of the vehicle. The sensor data may for example be an image captured from a camera of the vehicle. The image may be provided to an image processing algorithm to determine one or more physical features which may be indicative of an object. The advantage here is to provide a reliable mechanism to determine an object by recognizing at least one physical feature of the object from the sensor data.

In one embodiment, the monitoring function determines the object based on an image difference. The image difference takes into account a) an image from a beginning and b) an image from an intermediate state and/or an end of the parking phase to determine the object. The object is detected by comparing two or multiple images taken at different times taking place during the parking phase. The object may be determined by comparing at least one first image taken at the beginning of the parking phase with at least one second image taken at the end of the parking phase. In other words, a differential image based on a net difference of at least the first temporal image and the second temporal image may be generated to determine the object. The differential image may be analyzed by the monitoring function of the control device to determine the object. The differential image may for example indicate a difference of animal that may be detected in the first temporal image but disappeared in the second temporal image during the parking phase. The advantage here is to alert a vehicle driver and/or an autonomous driving function of the vehicle to a danger of an object based on an image analysis.

In one embodiment, the monitoring function detects or determines the object based on a mechanical moment at least at one wheel of the vehicle. The object may be detected when a hindrance to the drive maneuver is felt and/or when a resistance to a movement of at least one wheel of the vehicle is determined during the drive maneuver. The protection mechanism comprises a further analysis of the object based at least on rolling and/or turning the wheel away from the object and maneuvering the vehicle such that a detection area of a predefined sensor of the vehicle is directed to the object. The protection mechanism is triggered to guide the driving assistance function and/or the vehicle driver to change the drive maneuver so that the object causing the hindrance can be detected by at least one sensor of the vehicle.. The driving assistance function may be signaled to reverse the vehicle so that the object can be brought within the detection area of at least one single sensor. This provides an advantage to detect and avoid an object by recognizing an obstacle to a drive maneuver of the vehicle.

In one embodiment, the monitoring function determines the object based on body temperature of the object. The body temperature is determined based on infrared radiation emitted from the object which is sensed by an infrared-sensitive sensor of the vehicle. In other words, an object may be detected by determining thermal energy emitted by the object in a detection area of a infrared sensor of the vehicle. The amount of the detected thermal energy and/or the radiated infrared energy may indicate at least a physical aspect of the object. The physical aspect may for example be a material of the object. The infrared sensor may be a passive infrared sensor which does not use any infrared source but which is sensitive to infrared light and/or heat emitted by an object in the field of view. The object detected by the passive infrared sensor may be a living object (e.g. a human being and/or an animal) and/or an inanimate object. This provides an advantage to determine an object by analyzing heat and/or infrared radiation emanating from the object.

In one embodiment, the monitoring function determines the object based on a signal of a mobile device and/or based on a sensor-based remote medical diagnosis. In other words, if a mobile device, e.g. a smartphone or a smart-watch or a tablet PC, is detected or located underneath the vehicle, it can be assumed that a person might also be positioned underneath the vehicle or might be in the course of crawling underneath the vehicle for recovering the mobile device. The signal of the mobile device can be, e.g., a radio signal of a WiFi module and/or of a cellular module and/or an RFID signal (RFID - radio frequency identification). A sensor-based medical remote diagnosis, as is known from the prior art, can be used to detect, e.g., a breathing of a body and/or a heart rate. If such a signal is detected underneath the vehicle, this can indicate the presence of a living object, i.e. a person or an animal.

In one embodiment, the monitoring function determines the object based on a capacitance change that is caused by the object when positioned underneath the vehicle as compared to a capacitance value given in the case of an absence of the object. In other words, a nearby object may be detected by sensing a disruption in an electric field that is emitted by a capacitive sensor. The measure of disruption and/or absorption of the electric field and/or a change in the electric field caused by the object may describe a material and/or thickness of the material of the object. Alternatively and additionally, an object may be detected by determining an electrical property, e.g. capacitance, of the object. The capacitive sensor can detect an object by applying an electric field in proximity to the object that is conductive and/or that has a significantly different permittivity than air, e.g. a cat and/or a dog and/or a human body and/or a glass bottle. This provides an advantage to precisely detect an object based on its material property that is sensitive to an applied electric field.

In one embodiment, the monitoring function detects the object at least partially in an indirect way based on a movement sensing of the object during the parking phase, wherein the movement sensing comprises detecting a movement towards the vehicle and registering or verifying the absence of a corresponding later movement away from the vehicle and/or detecting that an overall number of detected movements is an odd number. The movement sensing may be determined by a motion sensor. An object may be detected if a motion sensor is triggered and/or an electromagnetic radiation (e.g. light) emitted by the motion sensor is disrupted or blocked. Alternatively and additionally, the object may be detected if an infrared light given off by the object in the proximity to a motion sensor is determined. An object left underneath the vehicle may be assumed if a motion of the object is determined during the parking phase. The motion of the object may be detected based on a change in a position of the object. This provides an advantage to assist an autonomous vehicle and/or a user of the vehicle to avoid an object based on a detected movement of the object. If the motion sensor of the vehicle cannot determine a direction of movement, counting a number of movement incidents or movement events is also a possibility, as an odd number indicates that an object must have approached the vehicle after the beginning of the parking phase, but no corresponding second movement (away from the vehicle) could be detected. Naturally, two movements towards the vehicle (e.g. two animals) cannot be distinguished from one movement towards the vehicle and a second movement away from the vehicle, if the sensor merely senses motion without any information on direction.

In one embodiment, the monitoring function generates the control signal through the control device if the object is detected underneath the vehicle. The control signal selects the protection mechanism out of several predefined protection mechanisms depending on an object type (e.g. animal, litter, material type, size category) of the object. In other words, a control signal generated by the monitoring function triggers an object-dependent protection mechanism. As one protection mechanism, it may activate an autonomous driving function for guiding the drive maneuver of the vehicle. One protection mechanism may comprise generating a warning signal to be displayed on a display unit and/or a sound alarm signal and/or a notification to be displayed on a mobile device of the user of the vehicle or on a display of the vehicle. One protection mechanism may comprise activating a brake. The advantage here is to provide a flexible approach for assisting the autonomous driving function or the driver to perform a driving maneuver that takes into account the type of the object. The type may be recognized on the basis of a recognizing function that may be implemented on the basis of a machine learning algorithm, e.g. an artificial neural network.

In one embodiment, the protection mechanism comprises a warning signal provided on a display for the vehicle driver to avoid the object and/or an instruction signal to assist the autonomous driving function to stop or to alter the drive maneuver. In other words, if an object is detected, the protection mechanism may alert the vehicle-driver by providing a warning message on a display unit of the vehicle and/or the protection mechanism may activate the autonomous driving function to control the driving maneuver based on the detected object. The protection mechanism may instruct the autonomous driving function to stop vehicle if a pre-defined unsafe condition and/or an object posing a risk of damage is explicitly determined based on the sensor data.

In order to perform the inventive method in the vehicle, a control device is provided. The control device comprises at least a processing unit that is designed to perform an embodiment of the inventive method. The processing unit may comprise at least a microprocessor and/or at least one microcontroller and/or at least one signal processing unit.

One embodiment comprises that the control device is comprises at least one electronic control unit and/or a mobile terminal for a vehicle. The control device may be a functional device of the vehicle. The control device may be mobile device integrated with the vehicle through a network connection or an electronic control unit or a network of several electronic control units.

A vehicle that comprises an embodiment of the inventive control device is also part of the invention. According to embodiments of the invention, the vehicle is designed as a passenger vehicle or a rail vehicle or a truck or a robot or a driver-less transport vehicle. In particular, the vehicle is an autonomously driving vehicle, ADV, i.e. a vehicle with an autonomous driving function for automated driving.

The invention also provides a computer readable memory containing a programming code that is adapted to perform a method if executed by a control device, e.g. if executed by at least one processor of the control device.

The invention also comprises the combinations of the features of the different embodiments.

In the following an exemplary implementation of the invention is described. The figures show:
- Fig. 1: a schematic illustration of an embodiment of a motor vehicle according to the invention;
- Fig. 2: a schematic illustration for determining the object based on an image difference;
- Fig. 3: a schematic illustration for determining the object based on mechanical moment and/or movement; and
- Fig. 4: a schematic illustration for determining the object in indirect way based on a movement sensing of the object.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

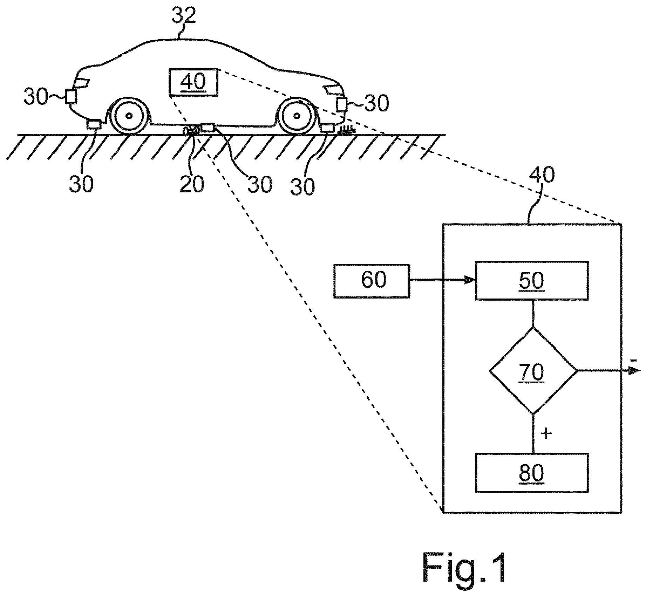

Fig. 1 shows a motor vehicle 10 that can be for example an autonomous vehicle or a driverless vehicle or a passenger vehicle or a freight vehicle. The vehicle 10 may be parked in a parking area of a road network or the vehicle 10 may be momentarily stopped for example at a traffic signal on a road. An object 20 may appear or may crawl or roll down the vehicle 10 while the vehicle 10 is standing still. The vehicle 10 may comprise at least one sensor 30 to detect the object 20 underneath the vehicle 10. The vehicle 10 may comprise a control device 40 which may be designed to perform a monitoring function 50. The monitoring function 50 may be executed by at least one processor of the control device 40. The monitoring function 50 is provided to determine the object 20 before and/or when the vehicle starts rolling or moving again (wheels start rolling or turning again) after the standstill in the parking phase or in the idle state.

For determining the object 20, the monitoring function 50 may receive input sensor data 60 from the at least one sensor 30. The respective sensor 30 may comprise a camera and/or radar and/or an ultrasonic sensor and/or an inductive sensor and/or a capacitive sensor and/or an infrared sensor and/or a motion sensor of the vehicle 10. The vehicle 10 may implement one sensor 30 or a combination of these sensors 30 to detect the object 20. The monitoring function 50 of the control device 40 may receive the sensor data 60 from one or different sensors of the vehicle 10. The monitoring function 50 may detect the object 20 based on the sensor data 60.

The monitoring function 50 may be started when a drive maneuver of the vehicle 10 is planned by an autonomous driving function and/or recognized due to corresponding movements of the driver, in particular if or only if the drive maneuver is the first maneuver after a parking phase of the vehicle 10. The monitoring function 50 may be triggered by switching on an ignition or an engine of the vehicle 10. The drive maneuver may be recognized if the vehicle 10 is switched on for the first time and/or the vehicle 10 resumes the drive maneuver after a momentary pause of the vehicle 10. The drive maneuver may be recognized based on an acceleration of the vehicle 10 and/or when a gear of the vehicle 10 is shifted from 'park' or 'idle' state to first gear. The monitoring function 50 may invoke a respective algorithm and/or a situation modelling to process the sensor data 60 to detect the object 20. The respective algorithm may process the sensor data 60 from the single onboard sensor 30 and/or the more than one onboard sensors 30 of the vehicle 10. The respective algorithm may comprise an image processing program. Monitoring function 50 may comprise an artificial neural network for processing the sensor data 60 in order to detect the object 20. Based on the sensor data 60, the monitoring function 50 may detect the object 20 explicitly (e.g. an animal, and/or a litter) or implicitly based on an estimation that the object 20 might exist without actually sensing the object 20 at the time of the start of the maneuver.

After analyzing the sensor data 60, the monitoring function 50 may provide a control signal based on a safety condition 70. The safety condition 70 describes a conditional strategy to decide or change a drive maneuver of the vehicle 10. The safety condition 70 may provide a "No" signal, If no object is detected by the monitoring function 50 (in the Figure this is represented by a minus-sign "-"). In other words, if the sensor data 60 is not indicative of an object, the safety condition 70 is fulfilled and a subsequent control signal may be a "green light" for the vehicle 10 to continue driving. In the case, an object is detected based on the sensor data 60 and/or if the safety condition 70 is not fulfilled, the control signal from the control device 40 may trigger at least a protection mechanism 80 (in the Figure this is represented by a plus-sign "+"). In other words, the vehicle 10 may be stopped and/or put on a hold until the safety condition 70 is satisfied.

The protection mechanism 80 may describe a warning signal to alert a driver of the vehicle 10 to a danger if the object 20 is detected explicitly based on any of the physical features (e.g. size and/or color and/or material and/or thermal radiation) of the object 20 and if these physical features do not fulfill the safety condition 70. The warning signal may be an audio and/or a video message and/or a graphical message depicting the detected object 20. The warning message may be displayed on a display unit of the vehicle 10 and/or the warning message may be transmitted to a mobile device (not illustrated here) to inform a user of the vehicle about the object 20. As a result, the drive maneuver of the vehicle 10 may be put on hold in order to avoid driving over the object 20. Additionally and/or alternatively, the protection mechanism 80 may generate an instruction signal for the autonomous driving function of the vehicle 10 adapt the planned driving trajectory if the object 20 is assumed to be existing or is detected underneath the vehicle 10. Based on the instruction signal, the autonomous driving function of the vehicle 10 may stop the vehicle 10 and/or change the drive maneuver and/or control the steering moves of the vehicle 10 to verify the assumed object.

Depending on a respective protection mechanism 80, a corresponding control signal may be provided by the control device 40 to assist the vehicle 10 and/or the vehicle driver to avoid the object 20. The control signal may be a warning message for the vehicle driver that may be displayed on a display unit if the object 20 is detected explicitly by at least one sensor 30 of the vehicle 10. The control signal may be an instruction signal for the autonomous driving function to stop and/or change the drive maneuver of the vehicle 10 if the object 20 is detected implicitly. The control signal may be an instruction signal for the autonomous driving function to change the drive maneuver of the vehicle 10, e.g. to reverse the vehicle 10, in order to bring the object 20 in the field view of at least one sensor 30 of the vehicle for a further analysis of the object 20.

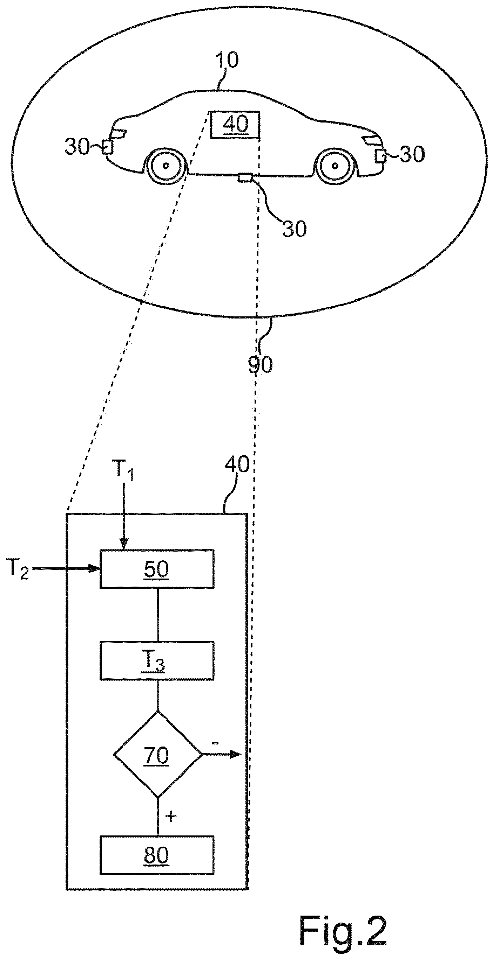

Fig. 2 shows an exemplary illustration of determining the object 20 underneath the vehicle 10 based on an image difference. The vehicle 10 may acquire images using at least one camera sensor 30 that may be arranged externally below the vehicle 10 and/or in the front and/or in the rear of the vehicle 10 and/or on a side of the vehicle 10. The onboard camera sensor 30 may be used alone and/or in combination with at least one different sensor 30 of the vehicle 10, e.g. an infrared sensor. The data acquired from the sensors 30 may be provided to the monitoring function 50 to determine whether an object exists underneath the vehicle 10. A respective image may be taken at the beginning of the parking phase and at the end of the parking phase respectively.

The onboard camera sensor 30 may capture at least one first image of the surroundings 90, in particular the underbody area of the vehicle 10 when the vehicle is being parked and/or before the vehicle is switched off. The surroundings 90 of the vehicle 10 may describe a 360° field of view covered by one or more than one onboard camera sensors 30. The onboard camera sensor 30 captures at least one image of the surroundings 90 of the vehicle 10 at the beginning and/or during a parking phase and/or at a time when the vehicle 10 is being parking and/or stopped. The first image T₁ may be taken at a time t1 and may be displayed on the display unit for the driver. The temporal image T₁ may indicate an object in the surroundings 90 of the vehicle. Time t1 may be in an initial time interval after is has been detected that the vehicle 10 has come to a standstill. The initial time interval may have a duration in the range from 1 second to 10 minutes. The temporal imageTi may be stored and/or provided to a processing unit of the control device 40 at the moment when the vehicle 10 is being parked and/or when the vehicle 10 is momentarily stopped.

The onboard camera sensor 30 captures at least one second image T₂ of the surroundings 90 at a different time t2. The temporal image T₂ may be taken when the parking phase is about to complete and/or when the vehicle 10 is switched on. t2 is after the initial time interval. The temporal image T₂ may be stored in the control device 40 and/or may be processed by the processing unit of the control device 40 of the vehicle 10. The temporal image T₂ may indicate a difference in the surroundings 90 from the temporal image T₁. The difference may be a change in a relative position of an object detected in the temporal image T₁.

The monitoring function 50 is executed by the processing unit of the control device 40 to compare the temporal image T₁ and the temporal image T₂. The monitoring function 50 provides a delta image or difference image T₃ by analyzing differences between the temporal image T₁ and the temporal image T₂ and/or by subtracting pixel values of the images T₂ and T₁. The difference image T₃ describes a net or a resulting difference between the two respective temporal images T₁, T₂. The resulting difference in the difference image T₃ may describe a change in the surroundings 90 of the vehicle 10. The change may have taken place during the parking phase and/or while the vehicle is standing still, i.e. between the times t2 and t1.

The difference image T₃ may be indicative of an object that may have crawled and/or rolled down the vehicle 10 during the parking phase. The monitoring function 50 may perform image processing of the difference image T₃ to detect the object 20. Based on the difference image T3, the safety condition 70 is examined to determine whether an object is detected. If an object is detected in the differential image T₃, a protection mechanism 80 may be triggered to assist the vehicle 10 to avoid the object 20. The difference image T₃ may be displayed on the display unit of the vehicle 10 to alert the driver of the vehicle 10. The difference image T₃ may present a static object and/or a moving object. The difference image T₃ may be determined when the vehicle 10 is momentarily stopped, e.g. at a red traffic signal.

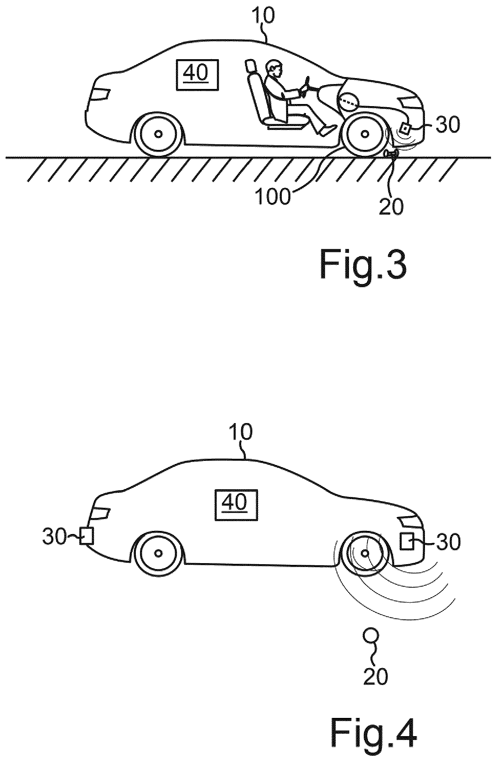

Fig. 3 shows an exemplary illustration of determining an object based on a mechanical moment or torque of at least one wheel 100 of the vehicle 10. The monitoring function 50 may be executed if the vehicle 10 resumes a drive maneuver after a parking phase. The vehicle 10 may perform the drive maneuver based on the safety condition that no object was detected. The sensors 30 of the vehicle 10 may not directly and explicitly detect an object 20 if the object 20 has crawled or rolled down the wheel 100 of the vehicle 10. In other words, the object 20 may not be detected if it has moved out of the detection area of the sensors 30. In such a case, the monitoring function 50 of the control device 40 based on the sensor data 60 may signal the vehicle 10 to continue with the drive maneuver. However, if according to the mechanical moment or torque the at least one wheel 100 the vehicle 10 can be expected to start moving (mechanical moment or torque greater than a predefined threshold) and there is however no movement detected (angular speed of the wheel stays zero), this can be interpreted as an indication that the movement of the wheel is blocked by an object that is positioned directly at the respective wheel.

In other words, the object 20 may be assumed based on an inertial force being exerted on the wheel 100 of the vehicle 10 if the drive maneuver is performed. The object 20 may present a hindrance to the drive maneuver and/or a change in the acceleration and/or orientation of the vehicle 10. In other words, the object 20 may be detected by determining inertial parameters, e.g. linear acceleration and/or orientation of the vehicle 10. If the object 20 is touching the wheel 100 of the vehicle 10, the inertial force and/or the inertial parameters may be different and/or larger from the normal case in the absence of the object 20. The inertial parameters and/or other parameter for indirectly detecting the presence of an object may be determined by acquiring sensor data from a sensor device 110 that may comprise an inertial sensor and/or a torque sensor and/or a sensor for angular speed.

The sensor data from the sensor device 110 may be provided to the monitoring function 50. The monitoring function 50 may assume the object 20 based on the sensor data from the sensor device 110. For example, sensor data describing the said mechanical moment or torque can be compared to a predefined first threshold and sensor data describing an angular speed of at least one wheel may be compared to a predefined second threshold. If the torque is greater than the first threshold and at the same time the speed below or equal to the second threshold, the presence of the object 20 may be assumed. The second threshold can be zero. The monitoring function 50 may signal the autonomous driving function to stop and/or change the drive maneuver of the vehicle 10. The change in the drive maneuver may describe a change of steer angle and/or acceleration of the vehicle 10. The vehicle 10 may be reversed and/or driven such that the object 20 presenting a hindrance to the wheel 100 of the vehicle 10 may be brought into the detection area of at least one sensor 30 of the vehicle 10.

Fig. 4 shows an exemplary illustration of determining an object in an indirect way based a movement sensing of the object 20. The object 20 may be detected by a motion sensor 30. The motion sensor 30 may be mounted externally in the front and/or the rear and/or on the right and/or on the left side of the vehicle and/or in the lower bottom of the vehicle 10. The motion sensor 30 may be an active device and/or may be operated when the vehicle is switched on. The motion sensor may be a passive device and/or may be operated while the vehicle is switched off. The motion sensor may for example be an ultrasonic transducer and/or a passive infrared sensor.

The motion sensor 30 may emit an ultrasonic or a sound wave to sense proximity of the vehicle 10.The motion sensor 30 may detect a presence of an object 20 when the object 20 enters the field of the emitted sound wave the sound sensor 30. The motion sensor 30 may receive a reflected wave after a contact with a nearby object 20 located at a position within the electromagnetic field of the sound waves. The position of the object 20 may be detected based on a disruption of the emitted sound waves if the emitted sound waves of the motion sensor 30 get reflected back from the object 20. Additionally, the position and/or material of the object 20 may be determined based on the reflected sound waves. The object 20 may be detected based on a change in the position of the object 20 within the electromagnetic field of the emitted waves of the motion sensor 30. Alternatively or additionally, the object 20 may be assumed to have crawled or rolled the vehicle 10, if a movement of the object 20 is determined during the parking phase of the vehicle 10. The motion sensor 30 may generate a warning message and/or a sound alarm if the electromagnetic field of the motion sensor 30 is disrupted by the object 20.

The detected movement of the object 20 may be stored by the motion sensor 30 and/or may be provided to the monitoring function 50 of the control device 40 when the vehicle 10 is switched on or resumed. The monitoring function 50 of the control device 40 may process the sensor data 60 from the motion sensor 30 to alert the vehicle 10 and/or a vehicle driver to an object that may have been assumed during the parking phase based on a movement. In other words, the monitoring function 50 based on the sensor data 60 may assume that the object 20 may be left underneath the vehicle during the parking phase. The control device 40 may generate a warning signal to signal the user of the vehicle 10 to verify whether the underbody area of the vehicle 10 is clean.

The motion sensor 30 may be a passive infrared sensor. The motion sensor 30 may detect a movement and/or a presence of the object 20 by sensing an infrared radiation which is put off by the object 20. The infrared radiation of the object 20 describes thermal energy emitted by the body of a respective object. The motion sensor 10 is sensitive to an infrared radiation and/or changes in the temperature. Based on the infrared radiation emanating from the object 20, the motion sensor 30 may be triggered and/or may generate an alarm while the vehicle is switched off. The motion sensor 30 may generate a warning message about the detected object 20 when the vehicle 10 is switched on after the parking phase. The warning message may be notified to the authorized user of the vehicle 10 on a mobile device.

Overall, the implementation example shows how an object detection after a parking phase may be provided.

## Claims

1. Method for detecting an object (20) underneath a vehicle (10) for resuming a drive maneuver after the vehicle (10) has been standing stationary and/or in a parking phase,
**characterized in that**
the vehicle (10) comprises a control device (40) that performs a monitoring function (50) to determine whether the object (20) is lying underneath the vehicle (10) and in the case that the object (20) is detected underneath the vehicle (10), the monitoring function (50) provides a control signal to trigger a protection mechanism for the drive maneuver in order to assist an autonomous driving function of the vehicle (10) and/or a vehicle driver to avoid a damage caused to and/or by the object (20).

2. Method according to claim 1, wherein the monitoring function (50) determines the presence of the object (20) by detecting at least one physical aspect of the object (20), wherein the at least one physical aspect describes a size and/or a material and/or a color of the object (20).

3. Method according to any of the preceding claims, wherein the monitoring function (50) detects the object (20) based on an image difference, wherein the image difference takes into account a) an image from a beginning and b) an image from an intermediate state and/or end of the parking phase.

4. Method according to any of the preceding claims, wherein the monitoring function (50) detects the object (20) based on a mechanical moment at least one wheel (100) of the vehicle (10), wherein the protection mechanism (80) comprises a further analysis of the object (20) based at least on rolling and/or turning the wheel (100) away from the object (20) and maneuvering the vehicle (10) such that a detection region of a predefined sensor (30) of the vehicle (10) is directed to the object (20).

5. Method according to any of the preceding claims, wherein the monitoring function (50) determines the object (20) based on body temperature of the object (20), and wherein the body temperature is determined based on infrared radiation emitted from the object (20) and sensed by an infrared-sensitive sensor of the vehicle (10).

6. Method according to any of the preceding claims, wherein the monitoring function (50) determines the object (20) based on a signal of a mobile device and/or based on a sensor-based remote medical diagnosis.

7. Method according to any of the preceding claims, wherein the monitoring function (50) determines the object (20) based on a capacitance change caused by the object (20) when positioned underneath the vehicle (10) as compared to a capacitance value given in the case of an absence of the object (20).

8. Method according to any of the preceding claims, wherein the monitoring function (50) detects the object (20) at least partially in an indirect way based on a movement sensing of the object (20) during the parking phase, wherein the movement sensing comprises detecting a movement towards the vehicle and registering the absence of a corresponding later movement away from the vehicle (10) and/or detecting that an overall number of detected movements is an odd number.

9. Method according to any of the preceding claims, wherein the monitoring function (50) generates the control signal through the control device (40) if the object (20) is detected underneath the vehicle (10), wherein the control signal selects the protection mechanism (80) out of several predefined protection mechanisms depending on an object type of the object (20).

10. Method according to any of the preceding claims, wherein the protection mechanism (80) comprises a warning signal provided on a display for the vehicle driver to avoid the object (20) and/or an instruction signal to assist the autonomous driving function to stop and/or change the drive maneuver.

11. Control device (40) comprising at least a processing unit, wherein the processing unit is adapted to perform a method according to any of the preceding claims.

12. Control device (40) according to claim 11, wherein the control device (40) comprises at least one electronic control unit and/or a mobile terminal for a vehicle (10).

13. Vehicle (10) comprising a control device (40) according to claim 11 or 12.

14. Vehicle (10) according to claim 13, wherein the vehicle is designed as a passenger vehicle or a truck or a robot or a driver-less transport vehicle or a rail vehicle.

15. Computer readable memory containing a programming code that is adapted to perform a method according to any of the claims 1 to 10 when executed by a control device according to claim 11 or 12.
